# EUROPÄISCHE PATENTANMELDUNG

(11) **EP 0 764 492 A2**
(43) Veröffentlichungstag der Anmeldung: **26.03.1997**
(21) Anmeldenummer: 96108517.2
(22) Anmeldetag: 29.05.1996
(51) Int. Cl.: B23D 47/04, B65G 47/53

(54) **Vorrichtung zum automatischen Zuschneiden von Bauteilen**

(30) Priorität: 31.07.1995 DE 19528077
(71) Anmelder: RAPID MASCHINENBAU GmbH, 72131 Ofterdingen (DE)
(72) Erfinder: Letzgus, Karl, 72108 Rottenburg-Dettingen (DE)
(74) Vertreter: Weber, Otto-Ernst, Dipl.-Phys.

(57) **Zusammenfassung**

Die Erfindung betrifft eine Vorrichtung zum automatischen Zuschneiden von Bauteilen. Dabei wird einerseits eine fest montierte Führungsbahn (7) vorgesehen, der die Bauelemente (12) von einem schwenkbaren Transportträger (1) zugeführt werden. Andererseits werden die Bauelemente (12) von einem schwenkbaren Sägeaggregat (17) auf Gehrung abgelängt, wobei eine erfindungsgemäße Schwenkung des Sägeaggregats (17) durch eine Vorabfrage der Schwenkbewegung, ein exaktes Positionieren des geschwenkten Sägeaggregats und durch Festlegen des Sägeaggregats in dieser Position erreicht wird.

## Beschreibung

Die Erfindung betrifft eine Vorrichtung zum automatischen Zuschneiden von Bauteilen mit einer Führungsbahn, die die Bauteile aufnimmt, und einem Transportträger, der die Bauteile zur Führungsbahn transportiert. Weiterhin betrifft die Erfindung eine Vorrichtung zum automatischen Zuschneiden von Bauteilen mit einer Schwenkeinrichtung, mit der eine Trenneinrichtung in eine Zuschnittposition schwenkbar ist.

In bekannten Vorrichtungen zum automatischen Zuschneiden und Sägen von Bauteilen wird das Bauteil von einem Transportträger zu einer höhenverfahrbaren Führungsbahn transportiert. Mit einem drehbaren Sägeaggregat kann das Bauteil dann mit einem vorgegebenen Winkel abgelängt werden. Dabei wird das Sägeaggregat geschwenkt, bis es einen Endanschlag erreicht, der über Einstelleinrichtungen genau justiert werden kann.

Der Erfindung liegt die **Aufgabe** zugrunde, eine Vorrichtung zum automatischen Zuschneiden von Bauteilen zu schaffen, die besonders betriebssicher und exakt arbeitet.

Die Lösung dieser Aufgabe erfolgt gemäß den kennzeichnenden Merkmalen des Anspruchs 1 oder des Anspruchs 6. Vorteilhafte Weiterbildungen sind in den Unteransprüchen beschrieben.

Nach einem Grundgedanken der Erfindung ist die Führungsbahn fest montiert und der Transportträger gegenüber der Führungsbahn schwenkbar. Der entscheidende Vorteil dieser Anordnung ist die einfach zu gestaltende Führungsbahn und die feste Montierung der Führungsbahn, wodurch eine Weiterbearbeitung des von der Führungsbahn getragenen Bauelements besonders einfach ist.

Der Transportträger wird bevorzugt von einem pneumatischen Zylinder geschwenkt. Dieser ist mit dem Transportträger verbunden und gewährleistet eine sichere und präzise Schwenkbewegung des Transportträgers. Die Führungsbahn ist günstigerweise starr an einer Halteeinrichtung montiert, die fest verankert ist. Dadurch wird eine sichere Halterung des Bauelements in der Führungsbahn gewährleistet.

In einer bevorzugten Weiterbildung der Erfindung ist eine Einstellvorrichtung vorgesehen, die einen exakten Anschlag für die Schwenkbewegung des Transportträgers bildet. Günstigerweise ist diese Einstellvorrichtung geometrisch starr mit der Führungsbahn verbunden, also beispielsweise auch an der Halteinrichtung befestigt. Die zu bearbeitenden Bauelemente sind bevorzugterweise Hohlkammerprofile, die mit mehreren parallel angeordneten Transportträgern in Richtung der Führungsbahn transportiert werden. Der Abstand der Transportträger voneinander richtet sich dabei nach der Länge der Hohlkammerprofile.

In einem alternativen, erfindungsgemäßen Lösungsansatz ist eine Einrichtung zur Winkelabfrage der schwenkenden Trenneinrichtung vorgesehen, die durch die Schwenkbewegung der Trenneinrichtung betätigbar ist. Weiterhin ist in diesem alternativen Lösungsansatz mit einer Positioniereinrichtung, die in Informationsverbindung mit der Einrichtung zur Winkelabfrage steht, die Trenneinrichtung in der gewünschten Position positionierbar und eine Feststelleinrichtung zum Festlegen der positionierten Trenneinrichtung vorgesehen. Dadurch wird eine sehr schnelle, exakte und verschleißarme Positionierung der gesamten Trenneinrichtung erreicht.

In einer bevorzugten Ausführungsform handelt es sich bei der Trenneinrichtung um eine Säge oder ein Sägeaggregat, mit dem Hohlkammerprofile unter Winkeln von bevorzugterweise 45 Grad, 90 Grad oder 135 Grad abgelängt werden.

Die Einrichtung zur Winkelabfrage kann günstigerweise durch Endschalter realisiert werden, die von der schwenkenden Trenneinrichtung betätigbar sind. Dadurch läßt sich die ungefähre Winkelposition feststellen und anschließend mit der bevorzugterweise als Pneumatikzylinder ausgebildeten Positioniereinrichtung die exakte Winkeleinstellung einstellen. Dazu wird der Pneumatikzylinder beidseitig mit Druck beaufschlagt, so daß sich auf beiden Seiten der gleiche Druck einstellt und die Schwenkbewegung des Sägeaggregats an einer exakt vorgegebenen Winkelposition gestoppt wird.

Die so gestoppte Trenneinrichtung wird dann mit der Feststelleinrichtung, die in einer Weiterentwicklung der Erfindung als pneumatisch betätigte Rolle ausgebildet ist, festgelegt. Durch die Verwendung einer Rolle in Verbindung mit einem abgerundet zulaufenden Einschnitt in der Trenneinrichtung wird ein Verklemmen der Trenneinrichtung beim Losfahren oder Weiterbewegen wirksam verhindert.

Aus einer Kombination der beiden erfindungsgemäßen Lösungsansätze läßt sich ein Zuschnittzentrum aufbauen, welches sämtliche Vorteile der einzelnen Lösungsansätze integriert und welches auch durch die Weiterbildungen der Ansätze ausgestaltet werden kann.

Nachfolgend wir die Erfindung anhand einer Zeichnung weiterbeschrieben. Im einzelnen zeigen die schematischen Darstellungen in
- Fig. 1: eine Draufsicht auf die gesamte Transportträgeranordnung;
- Fig. 2: eine Schnittansicht durch einen einzelnen Transportträger;
- Fig. 3: eine geschnittene Seitenansicht eines Sägeaggregats;
- Fig. 4: eine Draufsicht auf das Sägeaggregat gemäß Fig. 3.

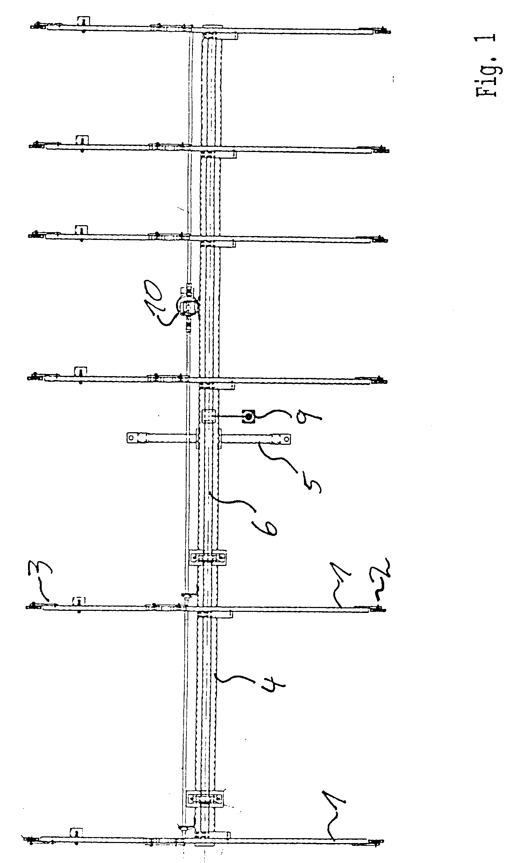

In Fig. 1 ist eine Transportträgeranordnung in ihrer Gesamtheit dargestellt, die sechs einzelne Tranportträger 1 aufweist. Auf diese Transportträger werden die Bauelemente, also in der Regel Hohlkammerprofile, aufgelegt und in Richtung der Führungsbahn transportiert. Die Bauelemente werden üblicherweise an dem Transportträger rechts außen angelegt. Der Abstand der anderen Transportträger zu dem ersten Transportträger richtet sich nach der Länge der üblicherweise zu bearbeitenden Hohlkammerprofile. Die hier gezeigte Anordnung ist also für fünf verschiedene Längen von Hohlkammerprofilen ausgelegt. Auch ein Transport von Zwischenlängen ist natürlich möglich. Die Bauelemente werden vom hinteren Ende 2 der Transportträger zum vorderen Ende 3 der Transportträger transportiert. Die Transportträger sind durch einen zentralen Träger 4 verbunden, der mit Standbeinen 5 ausgerüstet ist. Die Transportträger 1 sind durch eine Schwenkleiste 6 verbunden, die die gesamten Transportträger im Bereich des hinteren Endes 2 nach unten zieht, so daß die Transportträger 1 im Bereich des vorderen Endes 3 nach oben schwenken. Das geschieht jedesmal, wenn ein Bauelement den Bereich des vorderen Endes 3 erreicht und auf der Führungsbahn abgesetzt werden soll. Die Führungsbahn erstreckt sich senkrecht bzw. quer zu den Transportträgern 1 im Bereich des vorderen Endes 3 des Transportträgers. Die Schwenkleiste 6 wird durch einen pneumatischen Zylinder 9 betätigt. Durch die Anbindung sämtlicher Transportträger 1 an die Schwenkleiste 6 wird die gleichmäßige Schwenkbewegung der Transportträger sichergestellt. Weiterhin ist ein Motor 10 vorgesehen, der zum Antrieb der Transportbänder 1 dient.

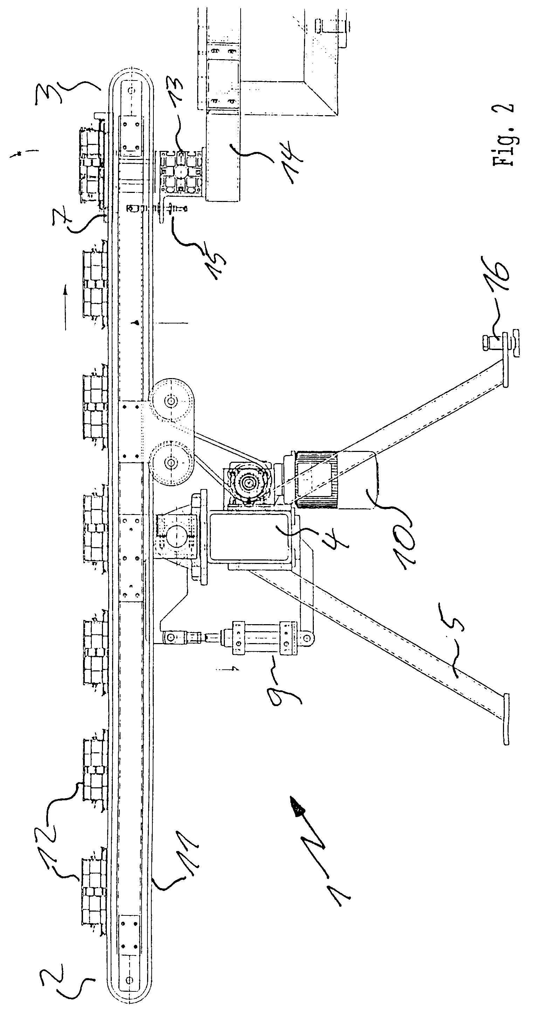

Ein einzelner Transportträger 1 ist in Fig. 2 dargestellt. Der Motor 10 treibt das umlaufende Band 11 des Transportträgers 1 an, so daß die Hohlkammerprofile 12 in Richtung der Führungsbahn 7 transportiert werden. Kurz bevor das nächste Hohlkammerprofil 12 die Führungsbahn 7 erreicht, zieht der pneumatische Zylinder 9 an, so daß über die Schwenkleiste 6 sämtliche Transportträger 1 zusammen nach oben geschwenkt werden und das Hohlkammerprofil 12 über die Führungsbahn geführt wird. Danach wird der Transportträger wieder abgesenkt und das Hohlkammerprofil dadurch auf der Führungsbahn 7 abgelegt. Die Führungsbahn 7 ist fest über ein Verbindungsstück 13 auf einer Halterung 14 montiert. Eine Einstelleinrichtung 15, die ebenfalls an dem Verbindungsstück 13 montiert ist und dadurch mit der Führungsbahn in fester Verbindung steht, dient zum Begrenzen und Einstellen der Schwenkbewegung des Transportträgers nach oben. Ein Teil der Einstelleinrichtung läßt sich über ein Gewinde verdrehen, so daß die Schwenkhöhe exakt eingestellt werden kann. Zu erkennen ist außerdem, daß am Standbein 5 des zentralen Trägers 4 noch eine Ausgleichsschraube 16 vorgesehen ist, mit der sich der Stand des Transportträgers exakt und günstig einstellen läßt.

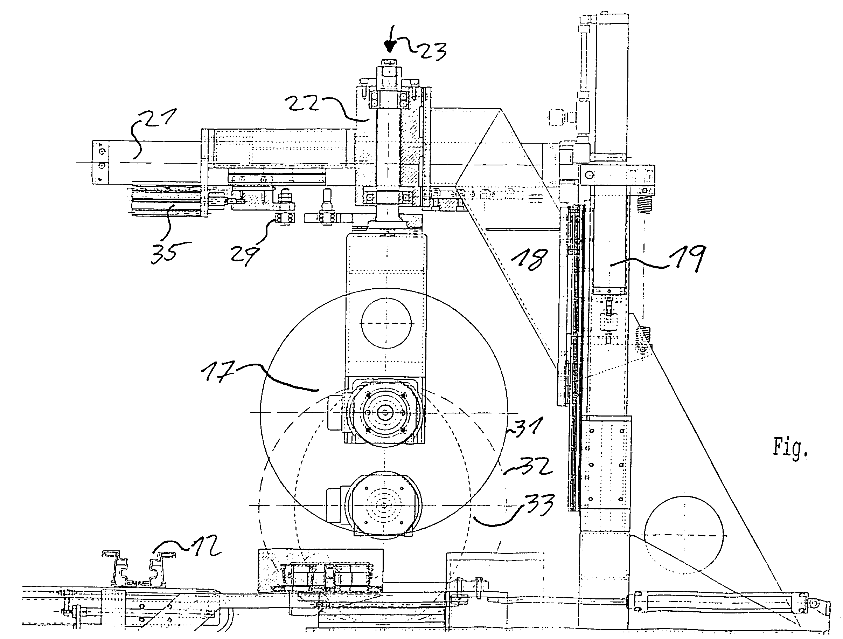

In Fig. 3 ist eine Seitenansicht des Sägeaggregats dargestellt, wobei die eigentliche Säge einmal mit der durchgezogenen Linie 31 in Ruheposition und mit der gestrichelten Linie 32 in der abgesenkten Position dargestellt ist. Die kurz gestrichelte Linie 33 stellt das Sägeblatt in einer geschwenkten Position dar, in der das Hohlkammerprofil 12 auf Gehrung abgelängt werden kann. Das Sägeaggregat 17 ist über einen Arm 18 an einem Hubarm 19 zum Auf- und Abbewegen des Sägeaggregats 17 befestigt. An dem Arm 18 ist die Säge 17 über einen drehbaren Bereich 20 befestigt, mit dem die Säge geschwenkt werden kann, um die Hohlkammerprofile auf Gehrung, also bevorzugt auf 45 Grad oder 135 Grad, abzulängen. Für die Schwenkbewegung ist ein kolbenstangenloser Pneumatikzylinder 21 vorgesehen, der über eine Indexplatte 22 mit dem drehbaren Bereich 20 in Eingriff steht.

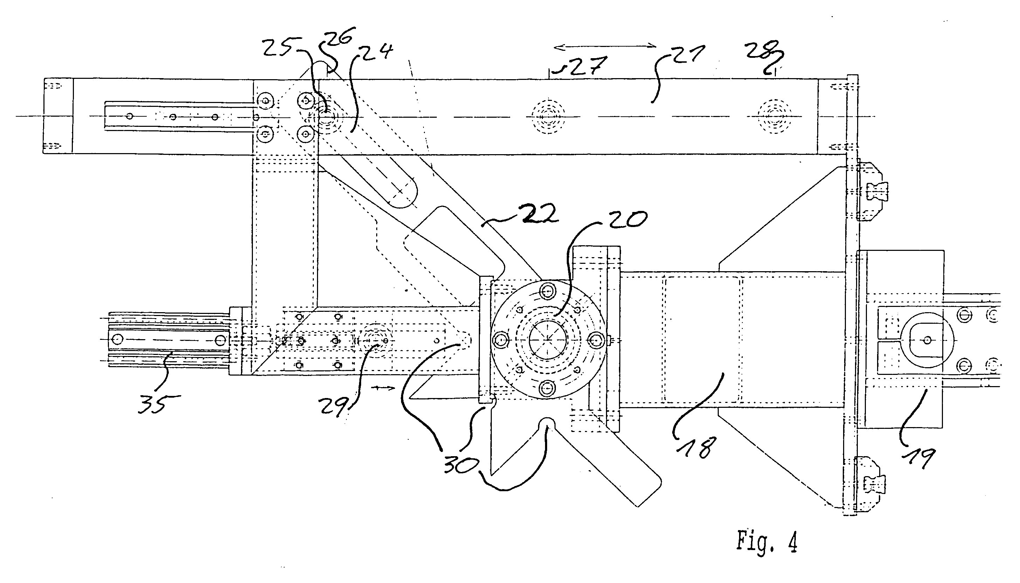

Die Indexplatte 22 ist in Fig. 4 dargestellt, die eine Ansicht in Richtung des Pfeils 23 in Fig. 2 darstellt. In der Draufsicht ist ebenfalls der Hubarm 19 mit dem Arm 18 zu erkennen, an dem der drehbare Bereich 20 gehaltert ist, der mit der Indexplatte 22 verbunden ist. Die Indexplatte 22 ist über ein Langloch 24 mit einer Rolle 25 des Pneumatikzylinders 21 verbunden. Der drehbare Bereich 20 und somit auch das Sägeaggregat 17 werden durch den Pneumatikzylinder über die Indexplatte 22 gedreht, bis einer der Endschalter 26, 27 oder 28 anzeigt, daß ungefähr die 45 Grad-, 90 Grad- oder 135 Gradposition erreicht ist. Dann wird der Pneumatikzylinder 21 von beiden Seiten mit Druckluft beaufschlagt, so daß sich auf beiden Seiten ein gleich großer Druck einstellt. Dadurch sind die von beiden Seiten wirkenden Kräfte gleich groß und der Kolben des Pneumatikzylinders wird gestoppt. Der Kolben und dessen Mitnehmer stehen also in einer Art Schwimmstellung. Eine pneumatisch betätigte Rolle zum Verriegeln 29, die von einem Zylinder 35 beaufschlagt wird, fährt dann in eine der abgerundeten Aussparungen 30, die der eingestellten Winkelposition zugeordnet ist. Das Sägeaggregat 17 wird auf diese Weise schnell, exakt und verschleißarm positioniert.

Die erfindungsgemäße Schwenkeinrichtung wird also durch eine Vorabfrage der Winkelposition des schwenkenden Sägeaggregats, ein exaktes Positionieren des geschwenkten Sägeaggregats und durch Festlegen des Sägeaggregats in dieser Position realisiert.

## Patentansprüche

1. Vorrichtung zum automatischen Zuschneiden von Bauteilen mit einer Führungsbahn, die die Bauteile aufnimmt und einem Transportträger, der die Bauteile zur Führungsbahn transportiert,
dadurch **gekennzeichnet**,
daß die Führungsbahn (7) fest montiert ist und daß der Transportträger (1) schwenkbar ist.

2. Vorrichtung nach Anspruch 1,
dadurch **gekennzeichnet**,
daß ein pneumatischer Zylinder (9) zum Schwenken des Transportträgers (1) mit diesem verbunden ist.

3. Vorrichtung nach einem der vorhergehenden Ansprüche,
dadurch **gekennzeichnet**,
daß die Führungsbahn (7) starr an einer Halteeinrichtung montiert ist.

4. Vorrichtung nach einem der vorhergehenden Ansprüche,
dadurch **gekennzeichnet**,
daß eine Einstelleinrichtung (15) zum exakten Einstellen der Schwenkbewegung des Transportträgers (1) vorgesehen ist und daß die Einstelleinrichtung (15) in Montageverbindung mit der Führungsbahn (7) steht.

5. Vorrichtung nach einem der vorhergehenden Ansprüche,
dadurch **gekennzeichnet**,
daß die transportierten Bauelemente Hohlkammerprofile (12) verschiedener Länge sind, die von mehreren nebeneinander angeordneten Transportträgern (1) transportiert werden.

6. Vorrichtung zum automatischen Zuschneiden von Bauteilen mit einer Schwenkeinrichtung, mit der eine Trenneinrichtung in eine Zuschnittposition schwenkbar ist,
dadurch **gekennzeichnet**,
daß eine Einrichtung zur Winkelabfrage der schwenkenden Trenneinrichtung vorgesehen ist, die durch die Schwenkbewegung der Trenneinrichtung betätigbar ist, daß mit einer Positioniereinrichtung, die in Informationsverbindung mit der Einrichtung zur Winkelabfrage steht, die Trenneinrichtung in der gewünschten Position positionierbar ist, und
daß eine Feststelleinrichtung zum Festlegen der positionierten Trenneinrichtung vorgesehen ist.

7. Vorrichtung nach Anspruch 6,
dadurch **gekennzeichnet**,
daß die Trenneinrichtung ein Sägeaggregat (17) ist, mit der Hohlkörperprofile (12) zuschneidbar sind.

8. Vorrichtung nach einem der Ansprüche 6 oder 7,
dadurch **gekennzeichnet**,
daß die Einrichtung zur Positionsabfrage Endschalter (26, 27, 28) sind.

9. Vorrichtung nach einem der Ansprüche 6 bis 8,
dadurch **gekennzeichnet**,
daß als Positioniereinrichtung ein Pneumatikzylinder (21) vorgesehen ist.

10. Vorrichtung nach Anspruch 9,
dadurch **gekennzeichnet**,
daß der Pneumatikzylinder (21) beidseitig mit Druck beaufschlagbar ist.

11. Vorrichtung nach einem der Ansprüche 6 bis 10,
dadurch **gekennzeichnet**,
daß eine pneumatisch betätigte Rolle (29) die Feststelleinrichtung bildet.
